# EUROPÄISCHE PATENTSCHRIFT

(11) **EP 1 431 529 B1**
(45) Veröffentlichungstag und Bekanntmachung des Hinweises auf die Patenterteilung: **13.09.2006**
(21) Anmeldenummer: 03028322.0
(22) Anmeldetag: 10.12.2003
(51) Int. Cl.: F01N 3/023, F01N 3/029, F01N 3/20, F01N 3/22, F01N 3/30, F01N 9/00

(54) **Verfahren zur Anhebung oder Absenkung der Abgastemperatur bei Dieselmotoren**
Process for heating or cooling the exhaust gas of a diesel engine
Procédé permettant d'augmenter ou diminuer la température des gaz d'échappement d'un moteur diesel

(30) Priorität: 20.12.2002 DE 10260899
(43) Veröffentlichungstag der Anmeldung: 23.06.2004
(73) Patentinhaber: DEUTZ Aktiengesellschaft, 51063 Köln (DE)
(72) Erfinder: Miebach, Rolf, 50321 Brühl (DE); Kaiser, Michael, 51143 Köln (DE)

(56) Entgegenhaltungen:
- EP-A- 0 342 415
- EP-A- 0 603 907
- EP-A- 0 976 915
- EP-A- 0 984 142
- DE-A- 3 502 866
- DE-A- 19 515 352
- DE-U- 9 109 004
- GB-A- 2 134 407
- US-A- 4 257 225
- US-A- 4 677 823
- PATENT ABSTRACTS OF JAPAN vol. 016, no. 498 (M-1325), 15. Oktober 1992 (1992-10-15) & JP 04 183917 A (HINO MOTORS LTD), 30. Juni 1992 (1992-06-30)

## Beschreibung

Die Erfindung betrifft, ein Verfahren zur Anhebung oder Absenkung der Abgastemperatur in einem Filter insbesondere Partikelfilter zum Ausfiltern und Sammeln von Ruß aus dem Abgas einer Brennkraftmaschine.

Eine Brennkraftmaschine mit einer solchen Anlage in Form eines Partikelfilters ist aus der DE 43 25 004 C2 bekannt. Bei diesem Partikelfilter wird eine Anhebung (beziehungsweise Absenkung) der Abgastemperatur zur Steuerung des Abbrennvorgangs in dem Partikelfilter durch eine Drosselung (beziehungsweise Entdrosselung) des die Abgasleitung durchströmenden Abgases erreicht. Dies wird durch eine Klappe in dem Filtergehäuse erreicht, die von einem thermostatisch gesteuerten Gestänge verschwenkt wird. Zusätzlich ist eine elektrische Heizung für den Thermostaten und den Partikelfilter versehen. Diese Anlage ist bauaufwendig und benötigt viele speziell angefertigte Teile. So muss das Partikelfiltermaterial zur Ermöglichung der Schwenkbewegung der Klappe eine genau vorgegebene Kontur aufweisen. Zudem ist eine wirksame Steuerung nur bezüglich der Anhebung der Abgastemperatur möglich.

Der Erfindung liegt die Aufgabe zugrunde, für eine derartige Brennkraftmaschine ein Verfahren zur Anhebung oder Absenkung der Abgastemperatur anzugeben, die beziehungsweise das gegenüber dem Stand der Technik verbessert ist.

Diese Aufgabe wird gemäß der Verfahren nach den Ansprüchen 1 bis 4 dadurch gelöst. Durch eine entsprechende Ausbildung der Einleiteinrichtung einerseits und andererseits durch die Auswahl (einschließlich der Temperatur) des Gases kann die Temperatur des Abgases in weiten Grenzen gesteuert werden. Insbesondere, wenn die Anlage zur Abgasnachbehandlung einen Partikelfilter (beispielsweise neben einem Katalysator) umfasst, ist eine gezielte und genaue Steuerung der Abgastemperatur zur Einleitung und Kontrolle des Regenerationsvorgangs des Partikelfilters möglich. Dabei ist der technische Aufwand gegenüber anderen Systemen gering.

Das Wesentliche der Erfindung ist die Einleiteinrichtung eine in die Abgasleitung eingesetzte als Injektor ausgebildete Düse. Zunächst einmal sind solche Düsen grundsätzlich bekannt und stehen somit in verschiedenen Ausführungen zur Verfügung. Da die Düse in die Abgasleitung eingesetzt ist, ist der eigentliche Partikelfilter einschließlich des Filtergehäuses unverändert, so dass auch hier auf Standardteile zurückgegriffen werden kann. Ergänzend ist auszuführen, dass der Partikelfilter auch mit (durch) einem Oxidationskatalysator kombiniert oder ergänzt sein kann. Ein weiterer Vorteil dieser Ausbildung liegt darin, dass der Druckverlust einer solchen Düse klein ist, solange kein Gas angesaugt wird. Somit ist im normalen Motorbetrieb keine relevante Beeinflussung des Abgasgegendrucks gegeben. Im Saugfall lässt sich dagegen der Druckverlust in der Abgasleitung durch die angesaugte Gasmenge in weiten Grenzen steuern.

In einer Ausgestaltung ist die Düse eine Venturi-Düse oder eine Saugdüse nach dem Coanda-Effekt. Solche Düsen sind - wie ausgeführt - grundsätzlich bekannt und stehen somit in den verschiedensten Ausführungen zur Verfügung.

In einer weiteren Ausgestaltung ist die Einleiteinrichtung eine in die Abgasleitung eingesetzte Sperrdüse oder eine Strahlpumpe. Mit einer Sperrdüse kann ein hoher Gegendruck und folglich eine starke Temperaturerhöhung des Abgases erzeugt werden, während eine Strahlpumpe strömungsunterstützend wirkt.

In weiterer Ausgestaltung ist die Einleitvorrichtung vor der Anlage zur Abgasnachbehandlung in die Abgasleitung eingesetzt. Durch diese Ausbildung wird eine Erhöhung des Abgasstroms mittels der Zugabe von gegebenenfalls bezüglich seiner Temperatur gesteuertem Gas erreicht. Dabei ist das Gas Abgas oder Druckluft. Hierbei heißt "Druckluft" Luft aus einem Druckluftsystem oder auch aus einer Förderpumpe oder einem Gebläse oder gegebenenfalls auch angesaugt aus der Umgebung, also ohne Festlegung auf ein bestimmtes Druckniveau.

Somit ist eine gute Prozesskontrolle der Verbrennungsvorgänge in dem Partikelfilter möglich. Weiterhin wird durch diese Ausgestaltung eine weitere Erhöhung des Gegendrucks durch erhöhten Gasdurchsatz durch die Anlage zur Abgasnachbehandlung, speziell den Partikelfilter bewirkt. Schließlich wird dadurch Energie aus der Schadstoffoxydation zurückgewonnen.

Wird bei Anordnung der Düse vor der Anlage zur Abgasnachbehandlung als Saugmedium Frischluft angesaugt, wird der Partikelfilter gekühlt und es wird zusätzlicher Sauerstoff für die Regeneration eingebracht. Dieses ist vorteilhaft, wenn die Brennkraftmaschine sehr hohe Abgastemperaturen erreicht und dabei nur noch sehr wenig Restsauerstoff im Abgas ist. Dies tritt insbesondere bei sogenannten Saugmotoren auf. Problem ist, dass die Partikelfilter in solchen Betriebszuständen auf sehr hohe Temperaturen gebracht werden, andererseits der enthaltene Ruß aber nicht verbrannt wird, da kein Sauerstoff vorhanden ist. Daher nimmt die Beladung des Partikelfilters noch zu, da die Brennkraftmaschine weiterhin Ruß produziert. Bei einer Änderung des Betriebszustandes der Brennkraftmaschine (Übergang in Teillast mit einem deutlichen Sauerstoffüberschuss im Abgas) wird der Partikelfilter durch die nunmehr schlagartige Verbrennungseinsetzung und Temperaturerhöhung leicht zerstört. Ein weiteres Problem ist, dass viele katalytische Beschichtungen für Temperaturen oberhalb von 600 °C oder in manchen Fällen auch erst oberhalb 800 °C nicht geeignet sind und zerstört werden. In diesen Fällen kann durch die gezielte Ansaugung von Frischluft die Verbrennung und damit die Temperatur gesteuert werden. Dabei kann die Zugabe von Sauerstoff auch pulsartig erfolgen, wobei dann die oxidierbare Rußmenge durch die Dauer des Pulses bestimmt wird, wobei eine Pulssteuerung einfacher als eine Proportionalsteuerung ist. Selbstverständlich ist bei dieser Ausgestaltung auch eine Temperaturkontrolle ohne Rußverbrennung möglich. Dies ist bei Brennkraftmaschinen sinnvoll einsetzbar, die sehr hohe Abgastemperaturen erreichen.

Ist die Düse hinter dem Partikelfilter in die Abgasleitung eingesetzt, wird als Saugmedium bevorzugt Frischluft angesaugt, wodurch eine Kühlung des gereinigten Abgases während der Regeneration erfolgt. Dies ist beispielsweise dann von Vorteil, wenn das Abgas direkt hinter der Düse in die Umgebung geleitet werden soll, dies aber bei nicht gekühltem Abgas wegen der hohen Abgastemperatur problematisch ist.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Fig. 1:: Venturi-/ Coandadüse vor der Anlage zur Abgasnachbehandlung,
- Fig. 2:: Sperrdüse vor der Anlage zur Abgasnachbehandlung,
- Fig. 3:: Sperrdüse vor der Anlage zur Abgasnachbehandlung mit Abgaswärmetauscher,
- Fig. 4:: Sekundärlufteinblasung vor der Anlage zur Abgasnachbehandlung und
- Fig. 5:: Venturi-/ Coandadüse hinter der Anlage zur Abgasnachbehandlung.

Alle Figur zeigen eine Brennkraftmaschine 1 mit einer schematisch dargestellten Abgasleitung 2, in die eine Anlage zur Abgasnachbehandlung, in den Ausführungsbeispielen ein Partikelfilter 3, eingesetzt ist.

Unterschiedlich ist die Ausbildung und Einbindung der Einleiteinrichtung für ein Gas in die Abgasleitung 2.

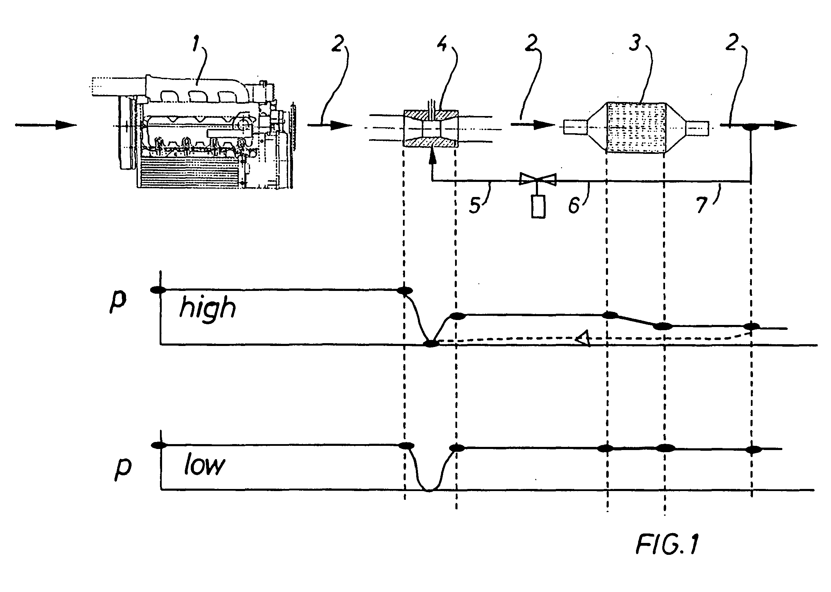

In dem Ausführungsbeispiel nach Figur 1 ist die Einleiteinrichtung 4 als Venturi-/Coandadüse ausgebildet und vor dem Partikelfilter 3 in die Abgasleitung 2 eingesetzt. Die Saugleitung 5 der Venturi-/Coandadüse saugt, gegebenenfalls zusätzlich gesteuert über ein Ventil 6, aus der Abgasleitung 2 hinter dem Partikelfilter 3 über eine Saugleitung 7 Abgas an. Durch diese Ausbildung wird eine Abgasgegendruckerhöhung / Erhöhung der Abgastemperatur zur Unterstützung von Gaskatalyse und/oder der Oxidation von Partikeln (thermisch, katalytisch, additivunterstützt, mit Sauerstoff oder anderen Oxidationsmitteln, im Partikelfilter oder Partikeloxidationskatalysator) erreicht. Bei geöffnetem Ventil 6 erfolgt die Regeneration und bei geschlossenem Ventil 6 die Beladung des Partikelfilters 3. Die darunter dargestellten Diagramme zeigen Druckdiagramme entlang der Abgasleitung 2 bei Regeneration und Beladung.

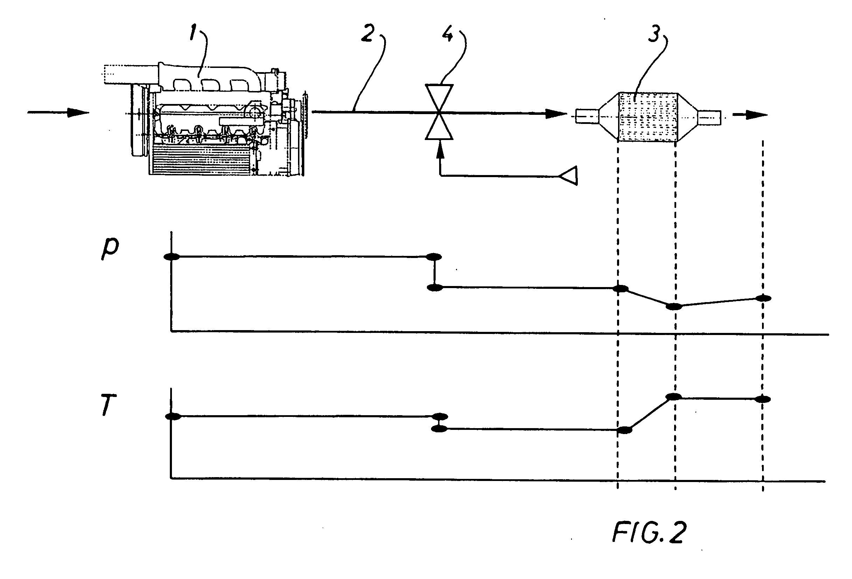

In dem Ausführungsbeispiel nach Figur 2 ist die Einleiteinrichtung 4 als Sperrdüse ausgebildet und ebenfalls vor dem Partikelfilter 3 in die Abgasleitung 2 eingesetzt. Über die Druckleitung 8 gesteuert über die Sperrdüse Druckluft in die Abgasleitung 2 eingeblasen. Durch diese Ausbildung wird eine Abgasgegendruckerhöhung / Erhöhung der Abgastemperatur zur Unterstützung von Gaskatalyse und/oder der Oxidation von Partikeln (thermisch, katalytisch, additivunterstützt, mit Sauerstoff oder anderen Oxidationsmitteln, im Partikelfilter oder Partikeloxidationskatalysator) erreicht. Die darunter dargestellten Diagramme zeigen Druck und Temperatur entlang der Abgasleitung 2.

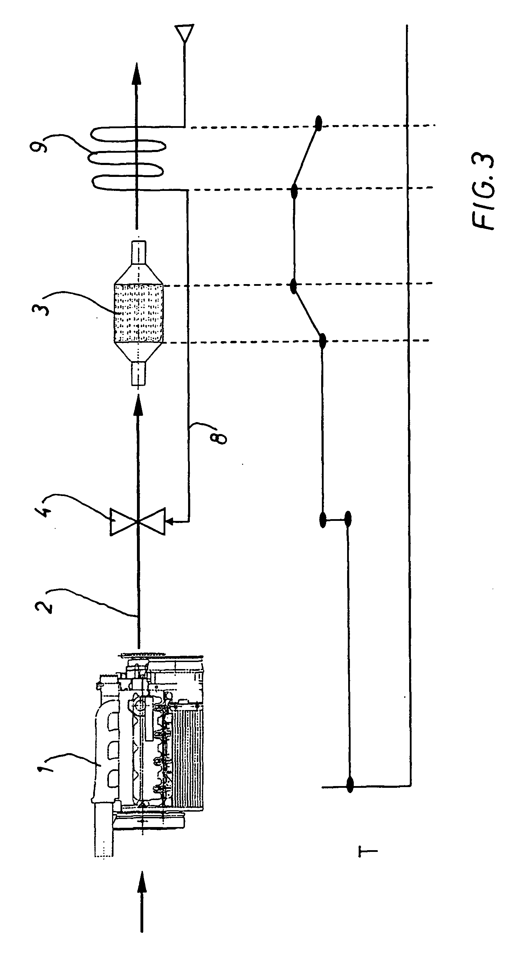

In dem Ausführungsbeispiel nach Figur 3 ist die Einleiteinrichtung 4 als Sperrdüse ausgebildet und ebenfalls vor dem Partikelfilter 3 in die Abgasleitung 2 eingesetzt. Über die Druckleitung 8 wird, gesteuert durch die Sperrdüse, Druckluft, die über einen Abgaswärmetauscher 9 geleitet wird, in die Abgasleitung 2 eingeblasen. Das darunter dargestellte Diagramm zeigt die Temperatur entlang der Abgasleitung 2.

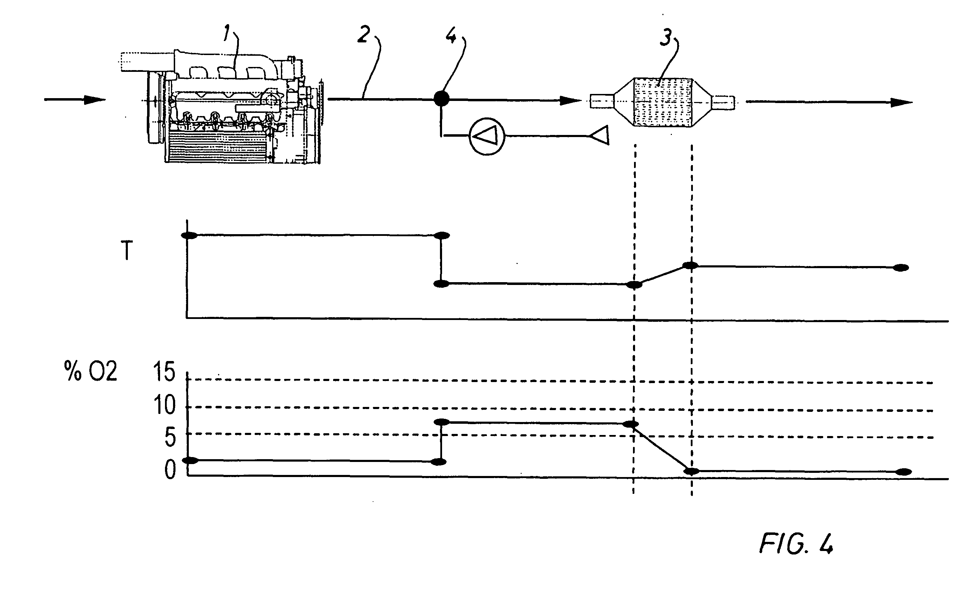

In dem Ausführungsbeispiel nach Figur 4 wird über die Einleiteinrichtung 4 Sekundärluft ebenfalls vor dem Partikelfilter 3 in die Abgasleitung 2 eingeblasen. Dadurch wird eine Abgastemperaturabsenkung bei Saugmotoren im Volllastbereich ohne Gegendruckerhöhung erreicht. Damit wird eine Schädigung von einem Katalysator vermieden, ebenso wird eine Selbstregeneration mit unkontrollierter Partikelverbrennung ausgeschlossen. Schließlich wird eine gezielte Erhöhung des Sauerstoffgehalts zur schonenden Regeneration im Volllastbetrieb erzielt. In den darunter dargestellten Diagrammen ist einerseits wieder der Temperaturverlauf entlang der Abgasleitung 2 dargestellt und zusätzlich der Verlauf des Sauerstoffgehalts entlang der Abgasleitung.

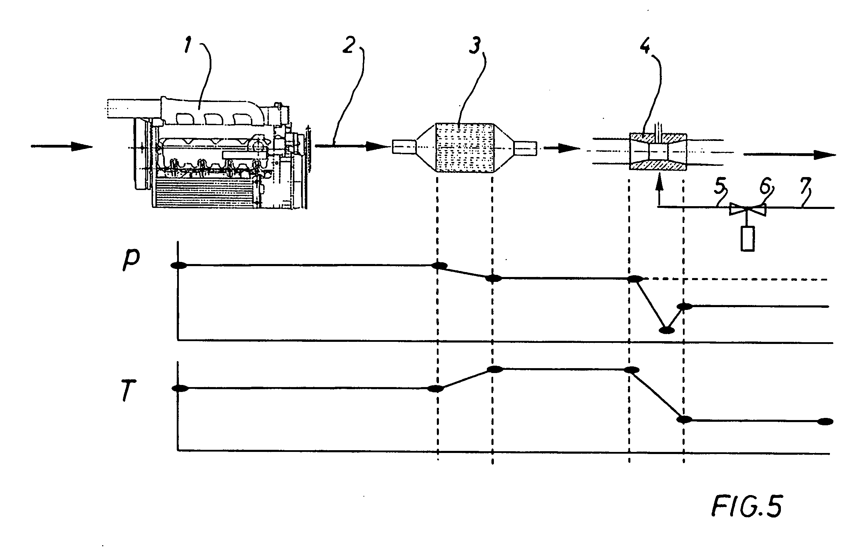

In dem Ausführungsbeispiel nach Figur 5 ist die Venturi-/Coandadüse hinter dem Partikelfilter 3 angeordnet und entsprechend dem Ausführungsbeispiel gemäß Figur 1 ist in die Saugleitung 5 gegebenenfalls ein Ventil 6 zur gesteuerten Zufuhr von Frischluft eingesetzt. Durch diese Ausbildung wird ebenfalls eine Abgasgegendruckerhöhung / Erhöhung der Abgastemperatur zur Unterstützung der Gaskatalyse und/oder der Oxydation von Partikeln (thermisch, katalytisch, additiv unterstützt, mit Sauerstoff oder anderen Oxydationsmitteln, im Partikelfilter oder Partikeloxydationskatalysator) erreicht. Zusätzlich wird eine Abkühlung des Abgases hinter dem Partikelfilter 3 auf verträgliche Werte während einer Regeneration erzielt. In den Diagrammen darunter sind Druck- und Temperatur entlang der Abgasleitung 3 dargestellt.

## Patentansprüche

1. Verfahren zur Anhebung der Abgastemperatur einer Brennkraftmaschine (1) mit einer in einer Abgasleitung (2) angeordneten Anlage zur Abgasnachbehandlung, insbesondere Partikelfilter (3) und gegebenenfalls Partikeloxydationskatalysator zum Ausfiltern und Sammeln von Ruß aus dem Abgas der Brennkraftmaschine (1), wobei mit dem Verfahren der Abbrennvorgang des in dem Partikelfilter (3) und gegebenenfalls Partikeloxydationskatalysator gesammelten Rußes gesteuert wird,
**dadurch gekennzeichnet, dass** über eine als Venturidüse oder Coandadüse ausgebildete Einleitvorrichtung (4) vor dem Partikelfilter (3) und gegebenenfalls Partikeloxydationskatalysator aus der Abgasleitung (2) hinter dem Partikelfilter (3) und gegebenenfalls Partikeloxydationskatalysator Abgas angesaugt wird, um eine Abgasgegendruckerhöhung sowie Erhöhung der Abgastemperatur zur Unterstützung von Gaskatalyse und/oder Oxidation von Partikeln zu erreichen.

2. Verfahren zur Anhebung der Abgastemperatur einer Brennkraftmaschine (1) mit einer in einer Abgasleitung (2) angeordneten Anlage zur Abgasnachbehandlung, insbesondere Partikelfilter (3) und gegebenenfalls Partikeloxydationskatalysator zum Ausfiltern und Sammeln von Ruß aus dem Abgas der Brennkraftmaschine (1), wobei mit dem Verfahren der Abbrennvorgang des in dem Partikelfilter (3) und gegebenenfalls Partikeloxydationskatalysator gesammelten Rußes gesteuert wird,
**dadurch gekennzeichnet, dass** über eine als Sperrdüse ausgebildete Einleitvorrichtung (4) vor dem Partikelfilter (3) und gegebenenfalls Partikeloxydationskatalysator aus einer Druckleitung (8) gesteuert Druckluft in die Abgasleitung (2) eingeblasen wird, um eine Abgasgegendruckerhöhung sowie Erhöhung der Abgastemperatur zur Unterstützung von Gaskatalyse und/oder Oxidation von Partikeln zu erreichen.

3. Verfahren zur Absenkung der Abgastemperatur einer Brennkraftmaschine (1) mit einer in einer Abgasleitung (2) angeordneten Anlage zur Abgasnachbehandlung, insbesondere Partikelfilter (3) und gegebenenfalls Partikeloxydationskatalysator zum Ausfiltern und Sammeln von Ruß aus dem Abgas der Brennkraftmaschine (1), wobei mit dem Verfahren der Abbrennvorgang des in dem Partikelfilter (3) und gegebenenfalls Partikeloxydationskatalysator gesammelten Rußes gesteuert wird,
**dadurch gekennzeichnet, dass** die Abgastemperatur durch in die Abgasleitung (2) vor dem Partikelfilter (3) und gegebenenfalls Partikeloxydationskatalysator über eine Einleiteinrichtung (4) eingeblasene Sekundärluft abgesenkt wird, wenn die Brennkraftmaschine (1) sehr hohe Abgastemperaturen erreicht, um eine Selbstregeneration mit unkontrollierter Partikelverbrennung auszuschließen und eine schonende Regeneration zu erzielen sowie die Zerstörung von katalytischen Beschichtungen zu verhindern

4. Verfahren zur Anhebung der Abgastemperatur einer Brennkraftmaschine (1) mit einer in einer Abgasleitung (2) angeordneten Anlage zur Abgasnachbehandlung, insbesondere Partikelfilter (3) und gegebenenfalls Partikeloxydationskatalysator zum Ausfiltern und Sammeln von Ruß aus dem Abgas der Brennkraftmaschine (1), wobei mit dem Verfahren der Abbrennvorgang des in dem Partikelfilter (3) und gegebenenfalls Partikeloxydationskatalysator gesammelten Rußes gesteuert wird,
**dadurch gekennzeichnet, dass** über eine als Venturidüse oder Coandadüse ausgebildete Einleitvorrichtung (4) hinter dem Partikelfilter (3) und gegebenenfalls Partikeloxydationskatalysator dem Abgas Frischluft zugeführt wird, um vor dem Partikelfilter (3) und gegebenenfalls Partikeloxydationskatalysator eine Abgasgegendruckerhöhung sowie Erhöhung der Abgastemperatur zur Unterstützung von Gaskatalyse und/oder Oxidation von Partikeln zu erreichen und zusätzlich das Abgas hinter dem Partikelfilter (3) und gegebenenfalls Partikeloxydationskatalysator abzukühlen.

## Claims

1. Method for raising the exhaust-gas temperature of an internal combustion engine (1) having an exhaust-gas aftertreatment installation, in particular a particulate filter (3) and if appropriate a particulate oxidation catalytic converter for filtering carbon particulates out of the exhaust gas of the internal combustion engine (1) and collecting them, arranged in an exhaust pipe (2), the method being used to control the burn-off operation of the carbon particulates which have collected in the particulate filter (3) and if appropriate the particulate oxidation catalytic converter, **characterized in that** exhaust gas is sucked in from the exhaust pipe (2) downstream of the particulate filter (3) and if appropriate particulate oxidation catalytic converter via an introduction apparatus (4), which is formed as a venturi nozzle or coanda nozzle located upstream of the particulate filter (3) and if appropriate particulate oxidation catalytic converter, in order to increase the exhaust-gas back pressure and to increase the exhaust-gas temperature so as to boost gas catalysis and/or oxidation of particulates.

2. Method for raising the exhaust-gas temperature of an internal combustion engine (1) having an exhaust-gas aftertreatment installation, in particular a particulate filter (3) and if appropriate a particulate oxidation catalytic converter for filtering carbon particulates out of the exhaust gas of the internal combustion engine (1) and collecting them, arranged in an exhaust pipe (2), the method being used to control the burn-off operation of the carbon particulates which have collected in the particulate filter (3) and if appropriate the particulate oxidation catalytic converter, **characterized in that** compressed air is blown into the exhaust pipe (2) in a controlled manner from a pressure line (8) via an introduction apparatus (4), which is formed as a locking nozzle and is located upstream of the particulate filter (3) and if appropriate particulate oxidation catalytic converter, in order to increase the exhaust-gas back pressure and to increase the exhaust-gas temperature to boost gas catalysis and/or oxidation of particulates.

3. Method for lowering the exhaust-gas temperature of an internal combustion engine (1) having an exhaust-gas aftertreatment installation, in particular a particulate filter (3) and if appropriate a particulate oxidation catalytic converter for filtering carbon particulates out of the exhaust gas of the internal combustion engine (1) and collecting them, arranged in an exhaust pipe (2), the method being used to control the burn-off operation of the carbon particulates which have collected in the particulate filter (3) and if appropriate the particulate oxidation catalytic converter, **characterized in that** the exhaust-gas temperature is lowered by secondary air which is blown into the exhaust pipe (2) upstream of the particulate filter (3) and if appropriate particulate oxidation catalytic converter via an introduction device (4) when the internal combustion engine (1) reaches very high exhaust-gas temperatures, in order to rule out self-regeneration with uncontrolled particulate combustion and to achieve gentle regeneration and also to prevent the destruction of catalytic coatings.

4. Method for raising the exhaust-gas temperature of an internal combustion engine (1) having an exhaust-gas aftertreatment installation, in particular a particulate filter (3) and if appropriate a particulate oxidation catalytic converter for filtering carbon particulates out of the exhaust gas of the internal combustion engine (1) and collecting them, arranged in an exhaust pipe (2), the method being used to control the burn-off operation of the carbon particulates which have collected in the particulate filter (3) and if appropriate the particulate oxidation catalytic converter, **characterized in that** fresh air is fed to the exhaust gas via an introduction apparatus (4) which is designed as a venturi nozzle or a coanda nozzle and is arranged downstream of the particulate filter (3) and if appropriate particulate oxidation catalytic converter, in order to increase the exhaust-gas back pressure and to increase the exhaust-gas temperature upstream of the particulate filter (3) and if appropriate particulate oxidation catalytic converter to boost gas catalysis and/or oxidation of particulates, and in order in addition to cool the exhaust gas downstream of the particulate filter (3) and if appropriate particulate oxidation catalytic converter.

## Revendications

1. Procédé servant à élever la température des gaz d'échappement d'un moteur à combustion interne (1) avec une installation disposée dans une conduite de gaz d'échappement (2) pour le post-traitement des gaz d'échappement, en particulier un filtre à particules (3) et, le cas échéant, un catalyseur d'oxydation de particules afin de filtrer et de collecter la suie présente dans les gaz d'échappement du moteur à combustion interne (1), le processus de combustion de la suie accumulée dans le filtre à particules (3) et, le cas échéant, dans le catalyseur d'oxydation de particules étant piloté par ledit procédé, **caractérisé en ce que** les gaz d'échappement sont aspirés de la conduite de gaz d'échappement (2) derrière le filtre à particules (3) et, le cas échéant, le catalyseur d'oxydation de particules, via un dispositif d'introduction (4) conçu en tant que gicleur Venturi ou gicleur Coanda, avant le filtre à particules (3) et, le cas échéant, le catalyseur d'oxydation de particules, afin d'obtenir une augmentation de la contre-pression des gaz d'échappement ainsi qu'une augmentation de la température des gaz d'échappement afin de soutenir la catalyse des gaz et/ou l'oxydation des particules.

2. Procédé servant à élever la température des gaz d'échappement d'un moteur à combustion interne (1) avec une installation disposée dans une conduite de gaz d'échappement (2) pour le post-traitement des gaz d'échappement, en particulier un filtre à particules (3) et, le cas échéant, un catalyseur d'oxydation de particules afin de filtrer et de collecter la suie présente dans les gaz d'échappement du moteur à combustion interne (1), le processus de combustion de la suie accumulée dans le filtre à particules (3) et, le cas échéant, dans le catalyseur d'oxydation de particules étant piloté par ledit procédé, **caractérisé en ce que** de l'air comprimé piloté à partir d'une conduite de pression (8) est soufflé dans la conduite des gaz d'échappement (2) via un dispositif d'introduction (4) conçu en tant que gicleur antiretour, avant le filtre à particules (3) et, le cas échéant, le catalyseur d'oxydation de particules, afin d'obtenir une augmentation de la contre-pression des gaz d'échappement ainsi qu'une augmentation de la température des gaz d'échappement afin de soutenir la catalyse des gaz et/ou l'oxydation des particules.

3. Procédé servant à abaisser la température des gaz d'échappement d'un moteur à combustion interne (1) avec une installation disposée dans une conduite de gaz d'échappement (2) pour le post-traitement des gaz d'échappement, en particulier un filtre à particules (3) et, le cas échéant, un catalyseur d'oxydation de particules afin de filtrer et de collecter la suie présente dans les gaz d'échappement du moteur à combustion interne (1), le processus de combustion de la suie accumulée dans le filtre à particules (3) et, le cas échéant, dans le catalyseur d'oxydation de particules étant piloté par ledit procédé, **caractérisé en ce que** la température des gaz d'échappement est abaissée par de l'air secondaire soufflé, via un dispositif d'introduction (4), dans la conduite des gaz d'échappement (2) avant le filtre à particules (3) et, le cas échéant, le catalyseur d'oxydation de particules, quand le moteur à combustion interne (1) atteint de très hautes températures de gaz d'échappement afin d'exclure une autorégénération avec combustion incontrôlée des particules, d'obtenir une régénération correcte et d'éviter la destruction des couches catalytiques.

4. Procédé servant à élever la température des gaz d'échappement d'un moteur à combustion interne (1) avec une installation disposée dans une conduite de gaz d'échappement (2) pour le post-traitement des gaz d'échappement, en particulier un filtre à particules (3) et, le cas échéant, un catalyseur d'oxydation de particules afin de filtrer et de collecter la suie présente dans les gaz d'échappement du moteur à combustion interne (1), le processus de combustion de la suie accumulée dans le filtre à particules (3) et, le cas échéant, dans le catalyseur d'oxydation de particules étant piloté par ledit procédé, **caractérisé en ce que** de l'air frais est amené aux gaz d'échappement derrière le filtre à particules (3) et, le cas échéant, le catalyseur d'oxydation de particules, via un dispositif d'introduction (4) conçu en tant que gicleur Venturi ou gicleur Coanda afin d'obtenir, avant le filtre à particules (3) et, le cas échéant, le catalyseur d'oxydation de particules, une augmentation de la contre-pression des gaz d'échappement ainsi qu'une augmentation de la température des gaz d'échappement afin de soutenir la catalyse des gaz et/ou l'oxydation des particules et, en plus, de refroidir les gaz d'échappement derrière le filtre à particules (3) et, le cas échéant, le catalyseur d'oxydation de particules.
